Europäisches Patentamt

European Patent Office

Office européen des brevets

(19)

(11) Publication number: **0 175 592**
**B1**

(12) # EUROPEAN PATENT SPECIFICATION

(45) Date of publication of patent specification: **23.11.89**

(51) Int. Cl.⁴: **G 01 G 13/02**

(21) Application number: **85306725.4**

(22) Date of filing: **20.09.85**

(54) **Weighing apparatus.**

(30) Priority: **20.09.84 JP 143245/84**
**20.09.84 JP 143246/84**
**25.04.85 JP 87456/85**

(43) Date of publication of application:
**26.03.86 Bulletin 86/13**

(45) Publication of the grant of the patent:
**23.11.89 Bulletin 89/47**

(84) Designated Contracting States:
**DE FR GB**

(56) References cited:
**EP-A-0 074 283**
**EP-A-0 085 446**
**US-A-4 206 822**
**US-A-4 281 729**
**US-A-4 483 462**

(73) Proprietor: **ISHIDA SCALES MFG. CO. LTD.**
**44, Shogoin Sannou-cho Sakyo-ku**
**Kyoto-shi Kyoto (JP)**

(72) Inventor: **Nakagawa, Yukio Inperiaru**
**Higashiokazaki 203, 32**
**Higashitennou-cho Okazaki**
**Sakyo-ku Kyoto-shi Kyoto (JP)**
Inventor: **Kakita, Yukio**
**326-78, Bodaiji Kousei-cho**
**Kouga-gun Shiga (JP)**
Inventor: **Kitagawa, Kazumi**
**423-3, Ogaki Ritto-cho**
**Kurita-gun Shiga (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

Courier Press, Leamington Spa, England.

## Description

The present invention relates to weighing apparatus, more particularly of the kind in which articles to be weighed are fed by a supply trough leading from a pooling unit to a weighing hopper.

A combinatorial weighing apparatus of this kind, for example as described in EP-A-0085446, can operate by distributing articles to respective weighing hoppers of a plurality of weighing units arranged in a circular pattern, for example, around a distributive table serving as an article pooling or storage unit, weighing the supplied articles, carrying out a combinatorial weighing process based on weight values provided by the respective weighing units to select an "optimum" combination, the sum total weight of which is equal to or closest to a target weight whilst remaining within a prescribed error range, and discharging the articles from those weighing hoppers which give the optimum combination, thereby to deliver a batch of articles the total weight of which is equal or closest to the target weight.

In use of such apparatus to weigh sticky articles such as pickled vegetables or syruped foods it has been found that surplus liquid sometimes accompanies the articles into the supply troughs and then passes into the weighing hoppers, and consequently influences unpredictably the weight values provided by the weighing units. The result may be successive batches having undesirably different quantities of the desired articles mixed with different amounts of surplus liquid.

According to the present invention there is provided weighing apparatus comprising a pooling unit, for receiving articles to be weighed, a supply trough having an inlet end arranged for receiving such articles from a peripheral region of the pooling unit when the apparatus is in use, and vibratory drive means connected with the supply trough and operable to cause such articles to pass therealong from its inlet end to an outlet end thereof beneath which is disposed a weighing hopper supported by a weighing unit for providing a measure of the weight of such articles contained in the weighing hopper, the supply trough having an article support surface which is inclined downwardly, in the direction away from the pooling unit, for encouraging articles to slide along the trough, and the weighing hopper being openable selectively to discharge its contents into a collection chute, mounted below the weighing hopper, on completion of a weighing operation;

characterised by a liquid drain device, provided at a location adjacent to the said outlet end of the supply trough, for draining off liquid from such articles before they pass from that outlet end towards the said weighing hopper.

An article feeder in the form of a bucket conveyor or a belt conveyor may be disposed close to a combinatorial weighing apparatus as described above, for supplying the articles to the article storage unit. Such an article feeder does not continuously supply the articles to the article storage unit, but preferably supplies the articles only when the quantity of articles pooled on the article storage unit is reduced below a predetermined magnitude, so as to prevent articles from being excessively supplied to the article storage unit. To this end the weighing apparatus may be provided with a detector for detecting the amount of articles on the article storage unit, and when the detector detects a prescribed reduction in the quantity of articles on the article storage unit, the article feeder is actuated to feed articles to the article storage unit. The detector and the article feeder may be coupled together by an electric cord. This however, can have the following drawbacks:

In use the weighing apparatus and the article feeder interconnected by such an electric cord will commonly be installed on a floor. When the weighing apparatus and the article feeder or their surroundings are to be cleaned, the weighing apparatus and the article feeder are required to be individually moved. At such time, the electric cord may become an obstacle to movement of the weighing apparatus and the article feeder, and may be cut off by forcibly moving the weighing apparatus and the article feeder away from one another if the operator happens to forget to disconnect the electric cord. Where food articles are weighed by the weighing apparatus, the weighing apparatus and the article feeder will need to be washed with water for sanitary purposes after completion of a desired sequence of weighing operations. When washing the weighing apparatus and the article feeder with water, the connectors used for connecting the electric cord may be immersed in water and caused to corrode, resulting in reduced electric conductivity.

In an embodiment of the present invention, including such an article feeder, the need for such an electric connecting cord is preferably avoided by providing supply regulating means arranged for causing a spatially transmitted signal to be received by a detector if the quantity of articles held by the pooling unit falls below a preselected magnitude, when the apparatus is in use, which signal causes the detector to initiate such operation of the article feeder.

In weighing apparatus including a distributive table for supplying articles to surrounding weighing machines, and in which a plurality of vibratory supply troughs extend radially from the distributive table to supply the articles from the table to the corresponding weighing machines, if the supply troughs with their vibrators are fixedly attached to an attachment base, this can give rise to difficulties when cleaning the supply troughs and inspecting and adjusting their vibrators. In an attempt to reduce such problems, the applicant has proposed a supply trough detachable from an attachment base, as disclosed in Japanese Laid-Open Utility Model Publication No. 59-62516. This document discloses a supply trough mounted on a vibrator supported by a plurality of springs on a base plate. The supply trough and the vibrator are detachably connected to the attachment base by means of a pin on the attachment base engaged in an attachment hole defined in the base plate. With this disclosed arrangement, the supply trough with its base plate can easily be detached from the attachment base when desired, but the springs interposed between the base plate and the vibrator are leaf springs, which are liable to be easily broken. Coil springs tend to be more durable, but are not so easy to attach to the base plate and vibrators in an effective and convenient manner. It is accordingly desirable to provide, in an embodiment of the present invention, a convenient and effective way of employing coil springs between the upper surface of the base plate and the lower surface of the vibrator, more particularly in such a manner that in order to adjust the height and inclination of the supply trough for smooth delivery therethrough of articles to be weighed, or for avoiding interference with adjacent devices, height and inclination adjustments can be effected by positioning a shim of a suitable thickness between the upper end of such a spring and the lower surface of the vibrator, or between the lower end of the spring and the upper surface of the base plate.

Reference will now be made, by way of example, to the accompanying drawings, in which:

Figure 1 is a side elevational view of a weighing apparatus incorporating features that can be included advantageously in an embodiment of the present invention;

Figure 2 is a schematic plan view of part of the apparatus of Figure 1;

Figures 3 and 4 are enlarged fragmentary side elevational views of the weighing apparatus of Figure 1;

Figures 5 and 6 are fragmentary side elevational views of modified forms of the apparatus of Figure 1;

Figure 7 is an enlarged sectional view corresponding to line VII - VII of Figure 3;

Figure 8 is a sectional view corresponding to line VIII - VIII of Figure 7;

Figure 9 is a perspective view of a member shown also in Figures 7 and 8;

Figure 10 is a fragmentary side elevational view of a weighing apparatus embodying the present invention;

Figure 11 is a side elevational view, to a larger scale, of part of the apparatus of Figure 10;

Figure 12 is a fragmentary perspective view, to a larger scale, of part of the apparatus, of Figure 10;

Figure 13 is an enlarged fragmentary side elevational view showing a detail of Figure 10; and

Figure 14 is a front elevational view corresponding to Figure 13.

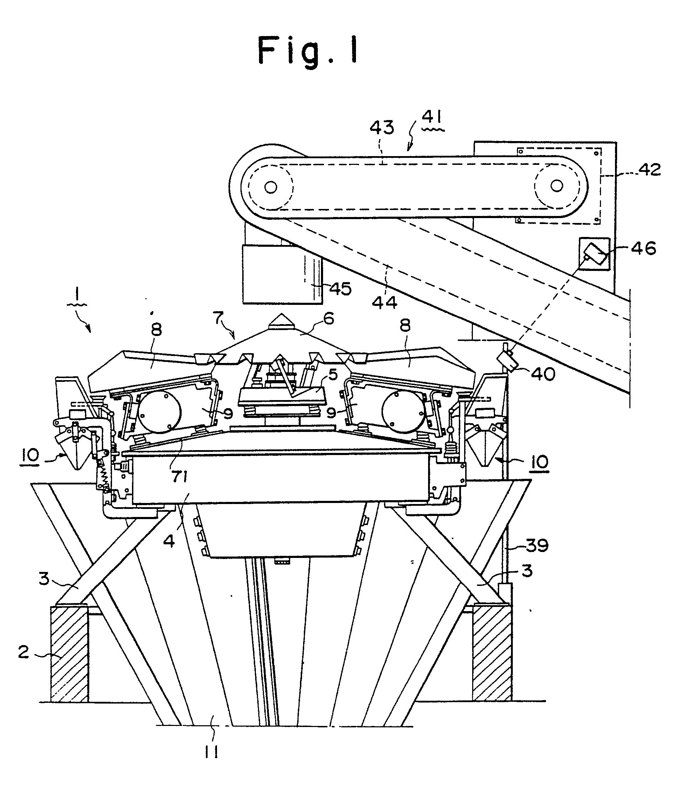

Figure 1 shows a combinatorial weighing apparatus 1 comprising a base structure 2, an attachment base in the form of a support table 4 mounted on a plurality of legs 3 on the base structure 2, a distributive or dispersive table 6 mounted centrally on the support table 4 through the intermediary of a vibrator 5 and serving as an article pooling unit 7, a plurality (fourteen in the illustrated embodiment) of radial supply troughs 8 supported by respective vibrators 9 on the support table 4 and arrayed around the distributive table 6, a plurality of weighing units 10 disposed respectively below the radially outer ends of the supply troughs 8, and a collection chute 11 of stainless steel in the form of an inverted cone, located below the weighing units 10, coaxial with the distributive table 6.

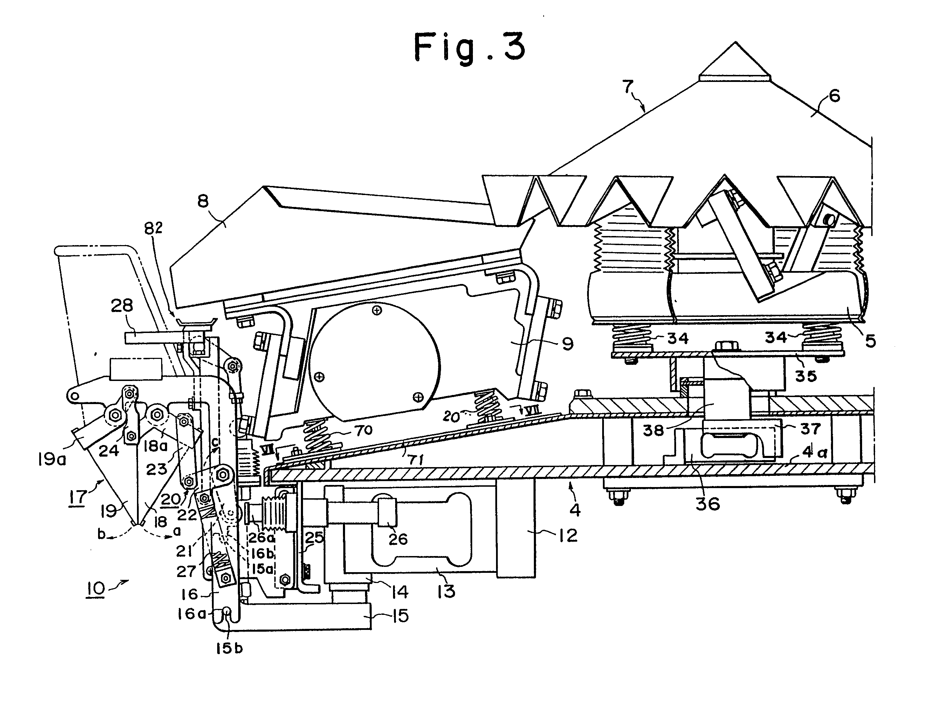

As illustrated in Figures 1 and 3, each of the weighing units 10 is composed of a load cell 13 having one end secured by a bracket 12 to the lower surface of a peripheral region of the support table 4, and a weighing hopper 17 attached to the other end of the load cell 13 by a bracket 14 and first and second support members 15 and 16. The weighing hopper 17 is positioned below the radially outer end of the corresponding supply trough 8. The weight of articles charged from the supply trough 8 into the weighing hopper 17 is detected by the load cell 13. The first support member 15 fixed by the bracket 14 to the load cell 13 has a recess 15a defined in the upper end thereof and an engaging pin 15b disposed below the recess 15a. The second support member 16 by which the weighing hopper 17 is supported has a recess 16a defined in the lower end thereof and an engaging pin 16b disposed above the recess 16a. The engaging pin 16b engages in the recess 15a, and the engaging pin 15b engages in the recess 16a, such that the first and second support members 15, 16 are separably coupled to each other to allow the weighing hopper 17 to be detached from the load cell 13 or the support table 4.

The weighing hopper 17 is composed of first and second gates 18, 19 having upper ends pivotally coupled to the second support member 16 and also connected to a link mechanism 20 for turning the first and second gates 18, 19 in the directions of the arrows a, b from the illustrated closed position. The link mechanism 20 comprises a first link 21 having one end pivotally connected to the second support member 16, a second link 22 having one end pivotally connected to the second support member 16 for angular movement with the first link 21, a third link 23 connecting the second link 22 and a frame 18a of the first gate 18, and a fourth link 24 connecting the frames 18a, 19a of the first and second gates 18, 19. The first link 21 has a distal end positioned in confronting relation to the distal end of a piston rod 26a of a cylinder 26 mounted on a bracket 25 attached to the lower surface of the support table 4. When the piston rod 26a is projected, the first and second links 21, 22 are turned in the direction of the arrow c against the bias of a spring 27 to cause the third link 23 to turn the first gate 18 in the direction of the arrow a and also to cause the fourth link 24 to turn the second gate 19 in the direction of the arrow b.

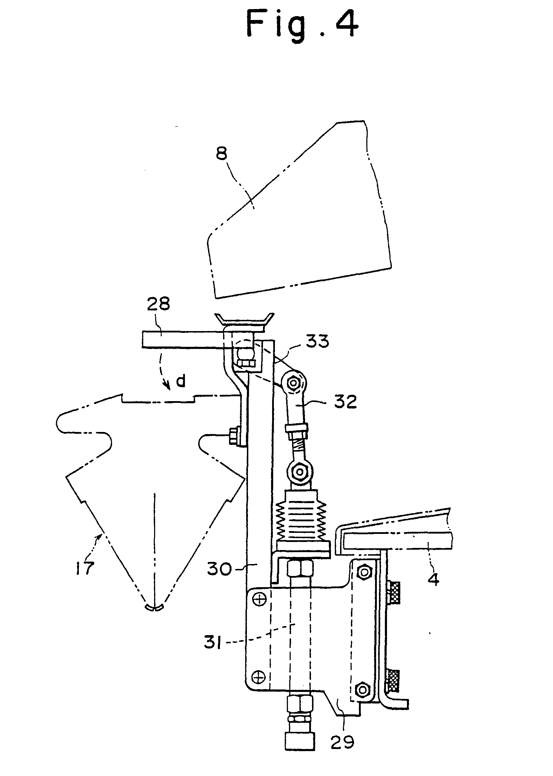

A shutter 28 is disposed between the outer end of the supply trough 8 and the weighing hopper 17 disposed therebelow for preventing unwanted articles from being charged from the supply trough 8 into the weighing hopper 17. As shown in Figure 4, the shutter 28 is pivotally supported on the upper end of a stand 30 fixed at its lower end to a support member 29. The shutter 28 can be angularly moved downwardly in the direction of the arrow d from the illustrated position by an air cylinder 31 operating by way of a rod 32 and a lever 33, the cylinder 31 being mounted on the stand 30.

As shown in Figure 3, the vibrator 5 for vibrating the distributive table 6 is mounted on a support base 35 by means of springs 34. The support base 35 is coupled by coupling members 37, 38 to one end of a load cell 36 having its other end fixed to a lower plate 4a of the support table 4. Thus, the weight of the attachment base 35, the vibrator 5, and the distributive table 6, as well as the weight of articles pooled in the article pooling unit 7 or the distributive table 6 is borne by the load cell 36. Since the weights of the support base 35, the vibrator 5 and the distributive table 6 are constant, the load cell 36 can measure the weight of the articles in the article pooling unit 7. When the weight of the articles is lowered below a predetermined level, light is emitted from a light-emitting element 40 (Fig. 1) such as a light-emitting diode attached to a post 39 mounted on the base structure 2.

As shown in Figure 1, an article feeder 41 is disposed above the weighing apparatus 1. The article feeder 41 has a belt 44 drivable by a motor 42 through a motor-driven transmission member such as a chain for transporting articles supplied on the belt 44 from a supply unit (not shown) towards a position over the weighing apparatus 1. The articles thus transported are then charged from an article charger 45 onto the distributive table 6 (article pooling unit 7). The article feeder 41 has a light detector 46 such as a phototransistor disposed in confronting relation to the light-emitting element 40 of the weighing apparatus 1. When the light detector 46 detects light emitted from the light-emitting element 40, the motor 42 is energized to actuate the belt 44.

In operation, articles charged onto the article pooling unit 7 by the article feeder 41 are successively supplied from the distributive table 6 through the supply troughs 8 into the weighing hoppers 17 of the respective weighing units 10 when the distributive table 6 is vibrated by the vibrator 5 and the supply troughs 8 are vibrated by the vibrators 9. The articles supplied to the weighing hoppers 17 are weighed by the load cells 13 of the weighing units 10. The weighing apparatus 1 has a control unit (not shown) for performing a combinatorial arithmetic operation based on the weights detected by the load cells 13 and selecting an optimum added weight combination which is equal to a prescribed target weight or close to the target weight and within a predetermined error range. Then, the articles are discharged from the weighing hoppers 17 of those weighing units 10 which give such an optimum weight combination by operating the cylinder 26 (Fig. 3) to cause the link mechanism 20 to turn the gates 18, 19 of the weighing hopper 17. The discharged articles are collected by the collection chute 11 into a mass of articles which has a total weight equal or close to the target weight. The shutters 28 disposed above the respective weighing hoppers 17 are actuated by the cylinder 31 to move downwardly, and at the same time the vibrators 9 for the corresponding supply troughs 8 are operated to supply articles from the article pooling unit 7 through the supply troughs 8 for a next cycle of weighing operation. When the weight of articles charged into the weighing hoppers 17 reaches a prescribed level, the corresponding load cells 13 produce signals to stop the supply of articles to the weighing hoppers 17. Since a small amount of articles tends to be charged into the weighing hoppers 17 after such signals are produced from the load cells 13, all of the charged articles are weighed again and the above combinatorial arithmetic operation is performed on the measured weights. As an alternative, the supply of articles can be stopped upon elapse of a predetermined period of time after the articles have started being supplied.

As the aforesaid cycle of weighing operation is repeated, the amount of articles pooled in the article pooling unit 7 is gradually reduced. When the amount of articles is reduced to an amount below a prescribed weight, the light-emitting element 40 is energized in response to a signal produced by the load cell 36 (Fig. 3), which measures the weight of the articles, and emits light towards the light detector 46 of the article feeder 41. When the emitted light impinges on the light detector 46, the motor 42 of the article feeder 41 is energized to drive the belt 44 through the power transmission member 43 to supply articles from the article feeder 41 to the article pooling unit 7 until the articles thereon amount to a predetermined quantity.

The operation of the article feeder 41 is thus dependent upon the condition of the weighing apparatus 1. Since the signal for operating the article feeder 41 is a light signal generated by the light-emitting element 40 of the weighing apparatus 1, it is possible to separate the weighing apparatus 1 mechanically from the article feeder 41. Therefore, the weighing apparatus 1 and the article feeder 41 can be moved around freely, irrespectively of each other, when they or their surroundings are to be cleaned. Inasmuch as there are no connectors used for electric connection between the weighing apparatus 1 and the article feeder 41, it is not necessary to exercise special care not to cover any such connector with water when the weighing apparatus 1 and the article feeder 41 are washed with water.

While in the illustrated embodiment a light-emitting element 40 and a light detector 46 are employed, other devices for transmitting and receiving other signals such as radio-wave signals or sound signals may be employed instead.

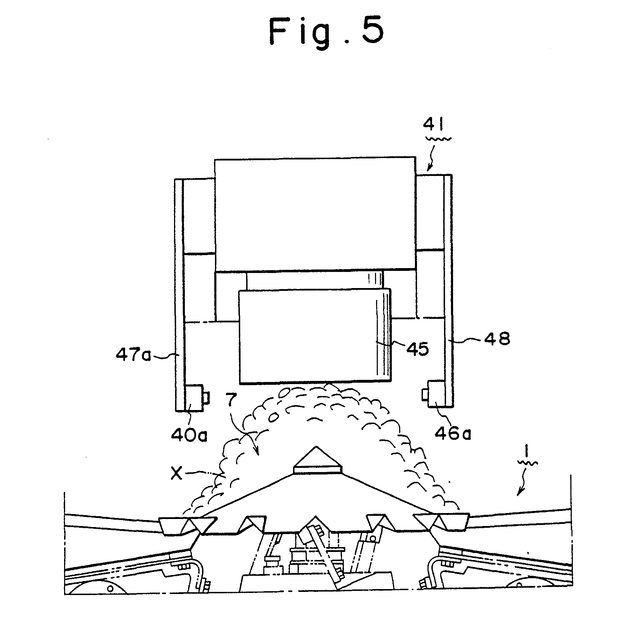

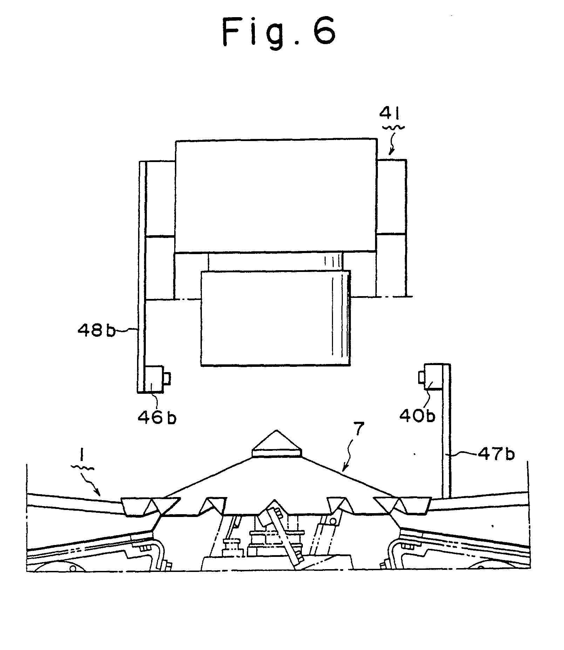

Figures 5 and 6 illustrate possible modifications of the Figure 1 apparatus that may be incorporated in embodiments of the present invention. According to these modifications the quantity of articles pooled on the article pooling unit 7 is not detected by the load cell 36, but by a means for detecting the height of stacked articles on the article pooling unit 7.

In Fig. 5, a light-emitting element 40a and a light detector 46a are attached respectively to support members 47a and 48a disposed respectively on opposite sides of the article charger 45 of the article feeder 41. The light-emitting element 40a and the light detector 46a are positioned in confronting relation to each other across the article pooling unit 7. When articles X pooled on the article pooling unit 7 are stacked above a prescribed height, light emitted from the light-emitting element 40a is blocked by the articles X. When the level of the stacked articles X falls below the prescribed height, light from the light-emitting element 40a falls on the light detector 46a to actuate the article feeder 41 to supply articles from the article feeder 41 onto the article pooling unit 7.

In Figure 6, a light-emitting element 40b is attached by a support member 47b to the weighing apparatus 1, and a light detector 46b is attached by a support member 48b to the article feeder 41. The light-emitting element 40b and the light detector 46b are disposed in confronting relation to each other across the article pooling unit 7. When the storage level of the articles on the article pooling unit 7 is reduced below a prescribed height, light emitted from the light-emitting element 40b impinges on the light detector 46b to operate the article feeder 41.

With the arrangements of Figures 5 and 6, the article feeder 41 which operates in dependence upon the condition of the articles pooled on the article pooling unit 7 is mechanically separated from the weighing apparatus 1.

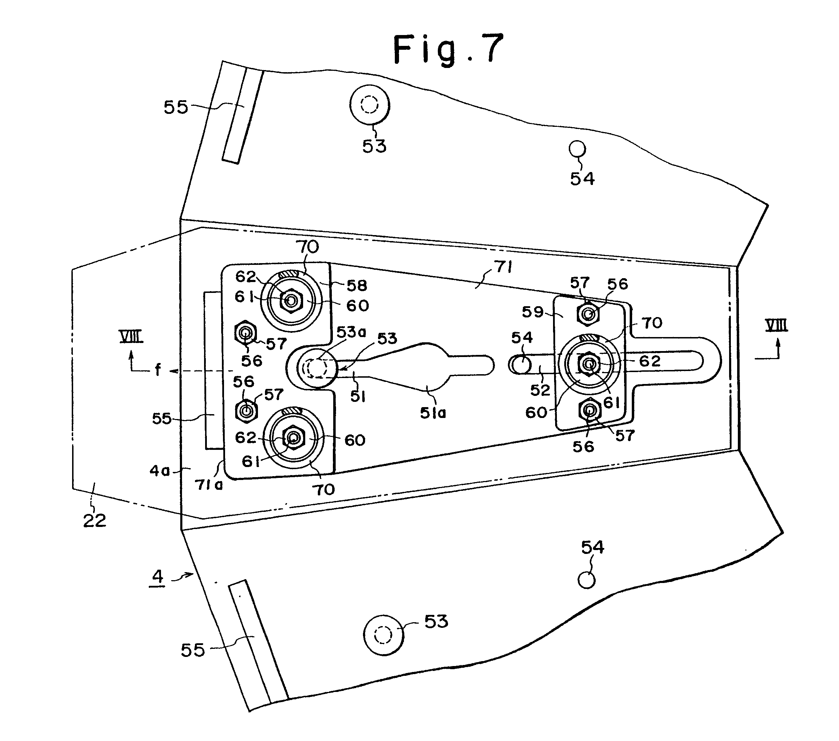

Figures 7 through 9 are diagrams illustrative particularly of a preferred support structure for the supply trough 8. The vibrator 9, attached to the supply trough 8 therebelow, is supported on the support table 4 by means of three coil springs 70. This support structure allows the vibrator 9 to be easily separated from the support table 4.

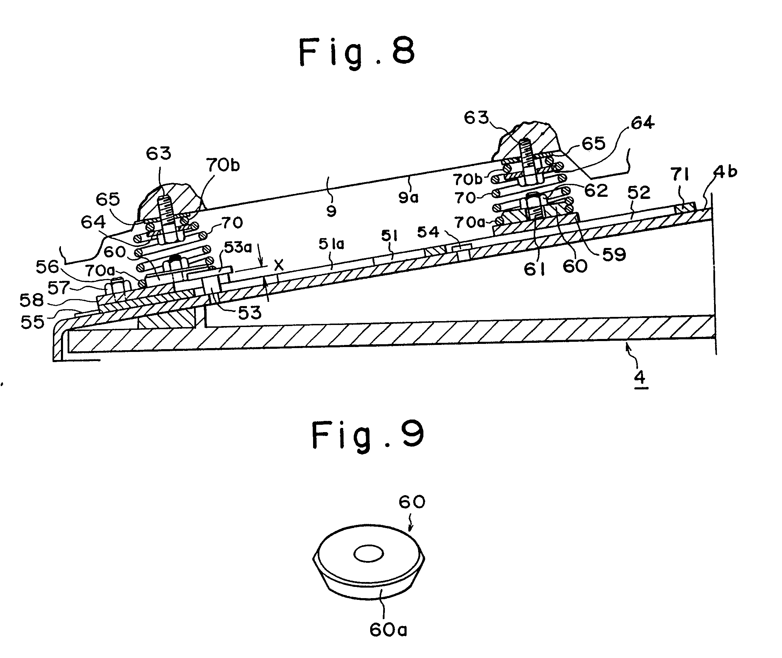

As illustrated in Figures 7 and 8, a base plate 71 on which the coil springs 70 are supported has first and second slots 51, 52 extending along a central axis thereof. First and second engaging pins 53, 54 project from the upper surface 4b of the attachment base constituted by the support table 4, on which the base plate 71 is placed, the first and second engaging pins 53, 54 engaging respectively in the slots 51, 52. The first engaging pin 53, which is located closely to the peripheral edge of the attachment base 4, has a head 53a greater in width than the first slot 51. The first slot 51 has an enlarged portion 51a to allow the pin head 53a to pass therethrough. By slidably moving the base plate 71 outwardly in the direction of the arrow f (Figure 7) until the enlarged portion

51a is positioned around the first engaging pin 53, the base plate 71 can be detached upwardly from the attachment base 4. With the base plate 71 positioned as illustrated the first engaging pin 53 is displaced from the enlarged portion 51a of the first slot 51, thus preventing the base plate from being detached from the attachment base 4. The second engaging pin 54 has a diameter slightly smaller than the width of the second slot 52 so that the second engaging pin 54 can be accommodated in the second slot 52. The upper surface 4b of the attachment base 4 is slanted, and the base plate 71 is stopped from sliding outwardly along that slanted upper surface 4b by a stopper 55 projecting from the surface 4b. To remove the base plate 71, the base plate 71 is slightly lifted to clear the stopper 55. To allow the base plate 71 to be thus lifted, there is a certain clearance X between the head 53a of the first engaging pin 53 and the upper surface of the base plate 71 as shown in Figure 8. Since the clearance X permits the base plate 71 to be lifted and slid outwardly, the function of the second slot 52 may alternatively be served by a circular hole, and the second engaging pin 54 can be disengaged from such a circular hole when the base plate 71 is slid outwardly.

First and second spring seats 58, 59 are fixed at opposite end regions of the upper surface of the base plate 71 by means of threaded studs 56 projecting upwardly from the base plate 71 and nuts 57 threaded over the threaded studs 56. Two spring engagement members 60, 60 are fixed to the first spring seat 58, and a single spring engagement member 60 is fixed to the second spring seat 59, by means of threaded studs 61 projecting upwardly from the first and second spring seats 58, 59 and nuts 62 threaded over the threaded studs 61. As shown in Figure 9, each of the spring engagement members 60 is in the form of a circular plate having a peripheral surface 60a tapered so that its diameter is reduced progressively downwardly. The coil springs 70 interposed between the base plate 71 and the vibrator 9 have lowermost turns 70a engaging around the tapered peripheral surfaces 60a of the spring engagement members 60 and tightly held against those members 60 under their own shrinking forces. The uppermost turns 70b of the coil springs 70 have a smaller coil diameter and are coupled to the lower surface 9a of the vibrator 9 by bolts 63 with washers 64. Shims 65 can be interposed between the lower surface 9a of the vibrator 9 and the uppermost turns 70b of the coil spring 70, for adjusting the height and inclination of the supply trough 8.

The first spring seat 58 may be dispensed with, and its two spring engagement members 60 may be fixed directly to the base plate 71. In the event that the slot 52 is replaced by a circular hole, the second spring seat 59 may be dispensed with and its spring engagement member 60 may be fixed directly to the base plate 71.

To facilitate washing of the weighing hoppers 17 and the supply troughs 8, or inspection of the vibrators 9, it is helpful to detach the supply troughs 8 from the support table 4. The base plate 71 carrying the supply trough 8 is attached to the support table 4 by the first and second pins 53 and 54 engaging respectively in the first and second slots 51 and 52 with the end 71a abutting against the stopper 55. When the supply trough 8 is to be detached, the base plate 71 is slightly lifted and slid outwardly in the direction of the arrow f (Fig. 7) until the enlarged portion 51a of the first slot 51 is positioned around the first engaging pin 53. The base plate 71 with the supply trough 8 can now easily be dismounted from the support table 4.

As described above, the base plate 71 and the vibrator 9 are coupled to each other by the coil springs 70, with the upper ends 70b of the coil springs 70 being fixed by the bolts 63 to the lower surface of the vibrator 9 and the lower ends 70a being fixed to the spring engagement members 60 secured to the base plate 71. Therefore, the supply trough 8 and the vibrator 9 can easily be detached simply by lifting the vibrator 9, or the supply trough 8 attached to the vibrator 9. By reversing the above-described process the supply trough 8 can easily be attached to the support table 4.

It is necessary to adjust the height and inclination of each of the supply troughs 8 to allow articles to be fed smoothly down the supply troughs 8 or to avoid interference with the adjacent supply troughs. For such adjustments, selected shims 65 are inserted and locked by the bolts 63 between the lower surface 9a of the vibrator 9 and the upper ends 70b of the coil springs 70. After selection of shims 65 of an optimum thickness, the bolts 63 are required to be loosened or tightened to accommodate the selected shims 65. As the bolts 63 are positioned inside the coil springs 70, it would be difficult to tighten or loosen those bolts with the base plate 71 coupled to the lower ends of the coil springs 70. However, because the lower ends 70a of the coil springs 70 are held under their shrinking forces in engagement with the tapered peripheral surfaces 60a of the spring engagement members 60 fixed to the base plate 71, the lower ends 70a of the coil springs 70 can readily be separated from the spring engagement members 60, simply by forcing the coil springs 70 and the base plate 71 apart from one another. With the coil springs 70 and the base plate 71 separated from one another, it becomes possible to insert a tool through each of the coil springs 70, via the released lower ends 70a, to loosen or tighten the bolts 63. Thus, the shims 65 can easily be attached and detached, or the coil springs 70 and the vibrator 9 can easily be coupled to and separated from each other.

As an alternative to the illustrated arrangement in which the lower ends 70a of the coil springs 70 are readily separable from the base plate 71, the upper ends 70b of the coil springs 70 may be made readily separable from the vibrator 9 in a similar manner. If desired, both the upper and the lower ends of the coil springs 70 could in this manner be made separable, from the vibrator 9 and the base plate 71 respectively.

The illustrated automatic weighing apparatus has its weighing units 10 arranged in a circular pattern, but its advantageous features could alternatively be included in an automatic weighing apparatus in which a plurality of weighing units are arrayed in a straight line or even in an apparatus having only a single weighing unit.

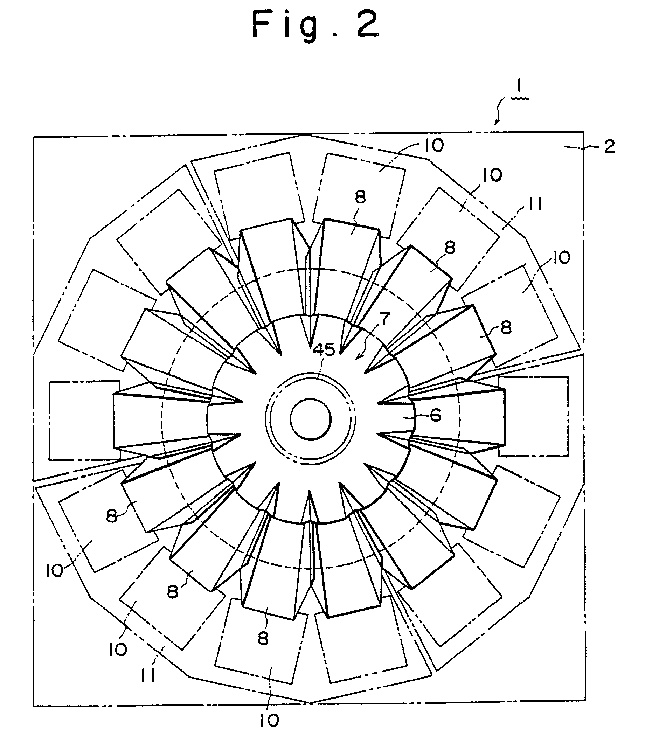

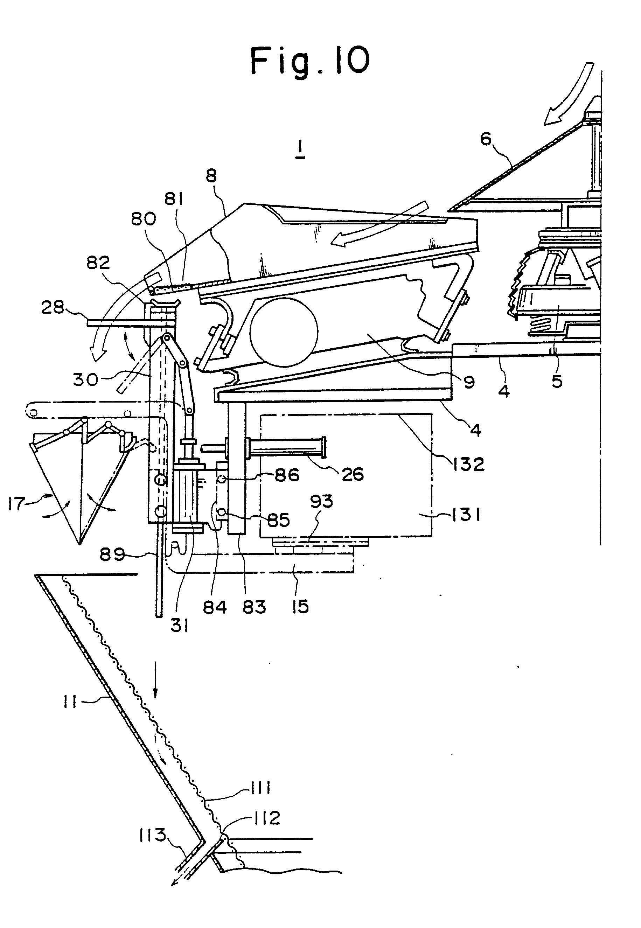

Figures 10 through 14 are diagrams illustrative of an embodiment of the present invention, including parts which are identical to those shown in Figures 1 through 9 and which are accordingly denoted by identical reference characters and will not be described subsequently in detail.

The distributive table 6 comprises a downwardly opening cone having its outer, upper surface inclined downwardly from the centre outwards, to an extent much larger than that of the distributive table of a conventional combinatorial weighing apparatus. The supply troughs 8 are spaced apart at intervals around the distributive table 6 and inclined downwardly in the radially outward direction for allowing sticky articles to slide smoothly down those supply troughs 8. The supply troughs 8 are supported by the respective vibrators 9 on the support table (attachment base) 4.

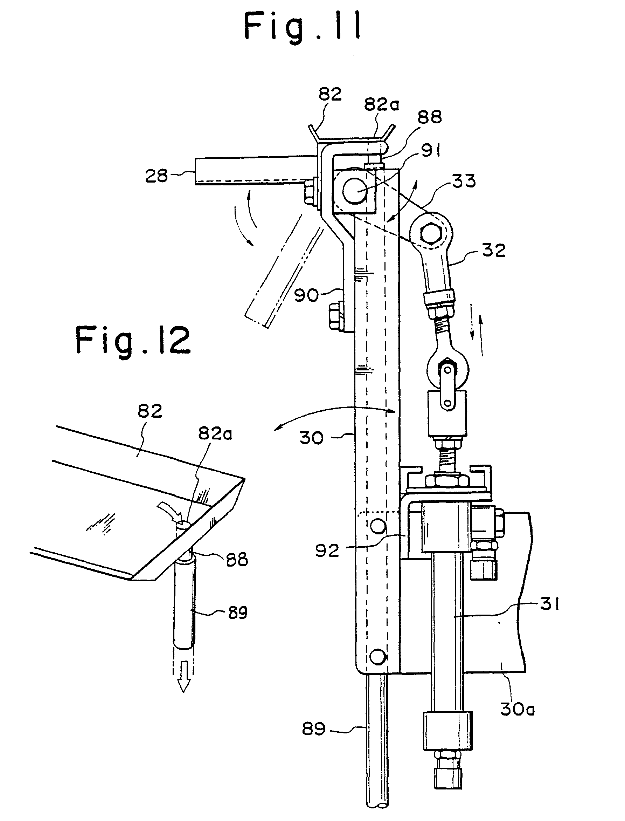

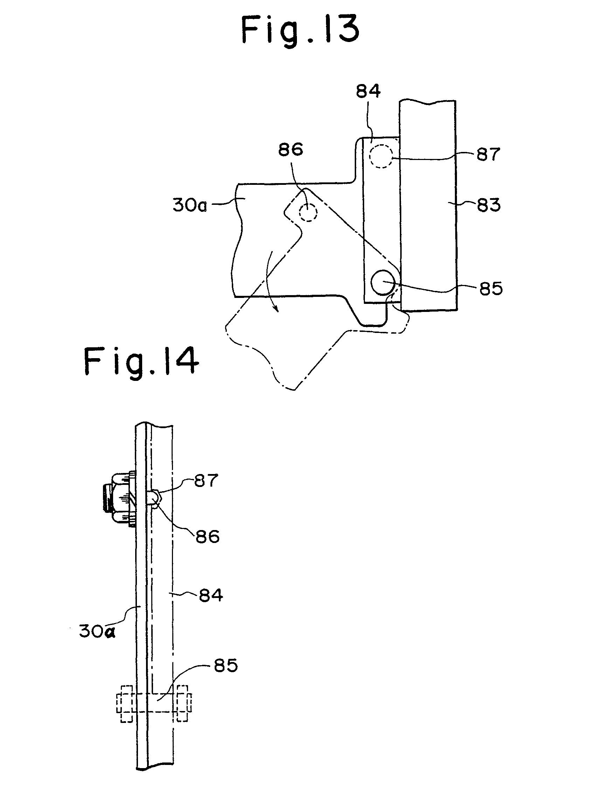

Each of the supply troughs 8 has a liquid drain hole 80 defined at a location adjacent to the radially outer end of the slide surface of the trough. The liquid drain hole 80 is covered with a net 81, extending flush with the slide surface of the supply trough 8, so that articles can slide over the net 81 towards the outer end of the supply trough 8 whilst liquid accompanying those articles drains downwardly through the liquid drain hole 80. A tray 82 is positioned below the liquid drain hole 80. As shown in Figure 10, the tray 82 is attached to the stand 30 which is supported by a bracket 84 on a support member 83 fixed to the support table 4. As illustrated in Figures 11 and 13, the stand 30 has its attachment member 30a pivotally supported by a pin 85 on the bracket 84 such that the attachment member 30a is tiltable through a prescribed angle defined by a stopper constituted by the lower end of the support member 83. As shown in Figures 13 and 14, the attachment member 30a is detachably connected to the bracket 84 through a detent means comprising a pushing ball 86 and a notch 87.

The tray 82 mounted on the upper end of the stand 30 has a drain aperture 82a defined at one end thereof and connected to a short drain pipe 88 to which there is coupled a drain hose 89 serving as a liquid drain passage and extending downwardly along the stand 30. The drain hose 89 has a lower end positioned over an intermediate portion of the collection chute 11.

As shown in Figure 10, a net chute 111 in the form of a truncated cone is positioned within the collection chute 11 in spaced relation thereto. A ring-shaped barrier 112 is disposed between the collection chute 11 and the net chute 111 and associated with a lateral drain pipe 113 for discharging liquid, including that received via the drain pipe 88 and the drain hose 89, from the collection chute 11 separately from articles passing down through that chute.

As shown in Figure 11, the plate-shaped shutter 28, which has a wide area underlying the distal end of the supply trough concerned, is angularly movably attached to a bracket 90 fastened by a pin 91 to the upper portion of the stand 30. The shutter 28 is swingably movable between a horizontal closed position and a tilted open position. The lever 33 is integral with the pin 91 and is connected through the link 32 to the air cylinder 31 which serves as an actuator and is fixed to the stand 30 by a bracket 92.

A weighing unit 131 (Figure 10), of a known construction and including the load cell 13 of Figure 3, is fixedly attached to the support table 4 below the vibrator 9 of each supply trough 8. The support member 15 (Figure 3) is coupled to the load cell of the weighing unit 131 through a sealing rubber diaphragm 93 (Figure 10).

The weighing unit 131 has a case 132 including upper and side surfaces integral with each other, a lower opening of the case 132 being fully sealed by the sealing rubber diaphragm 93. Thus, the weighing mechanism in the weighing unit 131 is protected from a liquid dropping downwardly, and from washing water applied to the upper and side surfaces of the case 132.

The combinatorial weighing apparatus according to this embodiment can be employed as follows. Sticky materials to be weighed, such as pickled vegetables or syruped materials, are supplied together with their accompanying liquid from the article feeder 41 (Figure 1) through the upper portion of the weighing apparatus 1 onto the central upper portion of the distributive table 6. The articles are then distributed evenly, radially outwardly into the supply troughs 8 as the distributive table 6 is vibrated upwardly and downwardly in circumferentially spiral motion.

The sticky articles supplied can slide smoothly down the distributive table 6 to its periphery, whence they pass into the supply troughs 8, and can then slide smoothly down the supply troughs 8, since the conically flared surface of the table 6 and the slide surfaces of the radial supply troughs 8 are inclined to a large extent.

The articles supplied into each supply trough 8 eventually drop downwardly from the radially outer end of the trough 8 into the associated hopper 17, provided that the shutter 28 has been swung downwardly, from the horizontal closed position of Figure 11, to the tilted open position. This is ensured when required, by operation of the air cylinder 31 connected to the link 32 and the lever 33, under the control of a computer (not shown).

Liquid accompanying the articles passes through the net 81 and liquid drain hole 80 into the tray 82 disposed below the liquid drain hole 80. This drained liquid is then discharged from the tray 82 through the drain aperture 82a, the drain pipe 88 and the drain hose 89, into the collection chute 11. This discharged liquid passes through the net chute 111 and is guided by the barrier 112 (Figure 10) into the drain pipe 113, from which the liquid is drained into a container (not shown) at the base of the apparatus.

In this manner, the weighing hoppers 17 are supplied with articles substantially free from their originally accompanying sticky liquid.

Any increase in the weight of the articles in the weighing hoppers 17 is detected by the corresponding weighing units 131, which thus operate dynamically to provide a basis for controlling the magnitude and time interval of vibration of the supply troughs 8. When the weight of the articles charged from the supply troughs 8 into the weighing hoppers 17 reaches a prescribed weight, as determined by the dynamic weight measurement performed by the weighing hoppers 17, the supply troughs 8 are caused by a control unit (not shown) to stop vibrating, and the shutter 28 is lifted, by operation of the air cylinder 31, from the tilted open position to the horizontal closed position to prevent additional articles from dropping from the supply troughs 8 into the weighing hoppers 17.

If the articles to be weighed are moist pickled or syruped materials, as opposed to dry articles, there will be a more marked tendency for the individual weights measured by the respective weighing units 131 at any particular time to differ from one another. However, such a situation can be positively advantageous in combinatorial weighing operations.

The articles charged into the weighing hoppers 17 are weighed by the load cells 13 in the weighing units 131, and the detected weights are then processed by the control unit. More specifically, a preset number of the weighing hoppers 17 are employed to give weight data for a combinatorial arithmetic operation which serves to select an optimum added weight combination equal or closest to a prescribed target weight.

Upon selection of such an optimum weight combination, those weighing hoppers 17 which give this weight combination are actuated, by means of the air cylinders 26, to discharge the articles therefrom into the collection chute 11.

The weighing hoppers 17 which are thus emptied are then supplied with articles from the corresponding supply troughs 8 vibrated under the control of the control unit, while at the same time the air cylinders 31 are actuated by the control unit to move the corresponding shutters 28 downwardly to the tilted open position.

The articles charged into the collection chute 11 may be accompanied by a slight residual amount of sticky liquid, which can drain through the net chute 111, into the space between collection chute 11 and the net chute 111, and is then guided by the barrier 112 into the drain pipe 113. This drained residual liquid is combined with the liquid drained through the drain hose 89 and then discharged into the aforementioned container or drain pan (not shown).

In the foregoing process, to minimize problems associated with the difficulty of ensuring smooth and predictable delivery of articles to be weighed that are sticky in nature, such as pickled vegetables or syruped foods, or are soft, such as dried fruits or cheese, the articles are charged from the supply troughs 8 directly into the weighing hoppers 17, without the intermediary of pool hoppers such as are commonly employed in other apparatus.

After the combinatorial weighing operation, the weighing system is washed with water supplied from above the system. Since the weighing unit 131 for each of the weighing hoppers 17 is completely sealed in a watertight manner by the rubber diaphragm 93, the weighing means 131 is protected against the entry of such water.

Washing water applied to the supply trough 8 can drain through the liquid drain hole 80, the tray 82 and the drain pipe 88, to clean the entire passage along which the sticky liquid drains during operation of the weighing system.

While the shutter 28, the tray 82, the lever 33 and the link 32 are being washed, the shutter 28 may be held in the open position to allow the weighing hopper 17 and the support member 15 to be washed with water.

The stand 30, on which the shutter 28, the tray 82, the lever 33, the link 32 and the air cylinder 31 are mounted, is angularly movably attached to the support member 83 (Figures 10 to 14) through engagement of the pushing ball 86 in the notch 87. By forwardly tilting the stand 30, disengaging the pushing ball 86 from the notch 87, efficient and thorough washing of the stand 30 with water can be facilitated.

In the washing process, the weighing hopper 17 together with the support member 16 of Figure 3 can be separated from the rest of the weighing apparatus. The net chute 111 can be detached from the collection chute 11. Detaching the net chute 111 from the collection chute 11 can enable them both to be more thoroughly washed with water.

The articles which can be weighed by a weighing apparatus embodying the present invention are not limited to pickled articles or syruped materials, but may also be dried fruits or cheese. Each of the weighing hoppers 17 may be openable on one side only. The actuators for opening and closing the shutter 28 and the weighing hoppers may be motor-driven gear mechanisms rather than air cylinders.

Although certain preferred arrangements have been shown and described herein, it should be understood that many changes and modifications could be incorporated in embodiments of the present invention.

**Claims**

1. Weighing apparatus comprising a pooling unit (6), for receiving articles to be weighed, a supply trough (8) having an inlet end arranged for receiving such articles from a peripheral region of the pooling unit when the apparatus is in use, and vibratory drive means (9) connected with the supply trough and operable to cause such articles to pass therealong from its inlet end to an outlet end thereof beneath which is disposed a weighing hopper (17) supported by a weighing unit (10) for providing a measure of the weight of such articles contained in the weighing hopper, the supply trough having an article support surface which is inclined downwardly, in the direction away from the pooling unit, for encouraging articles to slide along the trough, and the weighing hopper being openable selectively to discharge its contents into a collection chute (11), mounted below the weighing hopper, on completion of a weighing operation;
characterised by a liquid drain device (80, 82, 87), provided at a location adjacent to the said outlet end of the supply trough (8), for draining off liquid from such articles before they pass from that outlet end towards the said weighing hopper (17).

2. Apparatus as claimed in claim 1, wherein the said liquid drain device includes a tray (82), disposed below the said outlet end of the trough, for collecting such drained off liquid.

3. Apparatus as claimed in claim 2, including a drain passageway leading from the said tray (82).

4. Apparatus as claimed in claim 3, wherein the said drain passageway leads at a lower end thereof into the said collection chute (11).

5. Apparatus as claimed in claim 2, 3 or 4, wherein the liquid drain device includes also a liquid drain hole formed in the supply trough (8) and located above the said tray.

6. Apparatus as claimed in any preceding claim, further comprising a stand (30) supporting part of the said drain device, which stand is pivotally movable between an upright operative position and a tilted position for facilitating cleaning thereof.

7. Apparatus as claimed in any preceding claim, wherein there is provided adjacent to the outlet end of the supply trough a shutter (28) pivotally supported for movement, under the control of an actuator (31) coupled to that shutter, about a horizontal axis, between an open position for allowing such articles to pass from the trough to the weighing hopper therebelow and a closed position for inhibiting such passage.

8. Apparatus as claimed in claim 7 read as appended to claim 6, wherein the said shutter is pivotably mounted on the said stand (30).

9. Apparatus as claimed in any preceding claim, including a net chute (111) mounted within the said collection chute (11) for enabling liquid to drain away from articles discharged into the net chute, the said collection chute being provided with a lateral drain pipe (113) for draining off such liquid that has drained away through the net chute.

10. Apparatus as claimed in any preceding claim, wherein the said weighing hopper (17) is connected to the said weighing unit (10) by means enabling the hopper to be separated readily from the weighing unit.

11. Apparatus as claimed in any preceding claim, wherein the said supply trough (8) is mounted on a vibrator (9) carried by a set of coil springs (70) supported by a base plate (71), the base plate (71) being detachably mounted on a support base (4) which also supports the said pooling unit (6) and the weighing unit (10).

12. Apparatus as claimed in claim 11, wherein the coil springs (70) between the vibrator (9) and the base plate (71) are connected in readily separable manner to the base plate and/or the vibrator.

13. Apparatus as claimed in any preceding claim, including an article feeder (41), operable to supply such articles to the said pooling unit (6), and supply regulating means (40, 46) arranged for causing a spatially transmitted signal to be received by a detector (46) if the quantity of articles held by the pooling unit falls below a preselected magnitude, when the apparatus is in use, which signal causes the detector to initiate such operation of the article feeder.

14. Apparatus as claimed in claim 13, wherein a weight sensor is arranged to sense the weight of articles held by the pooling unit (6) and to cause the said signal to be transmitted to the said detector if the sensed weight is below a preselected value.

15. Apparatus as claimed in claim 13, wherein the supply regulation means include a light-emitting device (40a) arranged for transmitting a beam of light over the said pooling unit (6) so as to be received by the said detector, which is a light-sensitive detector (46a), if but only if the height to which articles are piled on the pooling unit is less than a preselected value.

16. Apparatus as claimed in any preceding claim, wherein the said weighing hopper is arranged to receive such articles directly from the outlet end of the said supply trough, there being no pool hopper provided between that outlet end and the weighing hopper.

17. Apparatus as claimed in any preceding claim, wherein the combination of the supply trough (8), the vibratory drive means (9), the liquid drain device (80, 82, 89), the weighing hopper (17) and the weighing unit (10) is one of a plurality of such combinations arranged in a circular array around a common distributive table, which constitutes the said pooling unit (6), so that the supply troughs extend radially outwardly from that table, the said collection chute (11) being common to all of the said combinations.

**Patentansprüche**

1. Wägevorrichtung mit einer Sammeleinheit (6) zum Aufnehmen zu wägender Artikel, einer Beschickungsrinne (8), deren Einlaßende so angeordnet ist, daß sie beim Betrieb der Vorrichtung die Artikel aus einem Randbereich der Sammel-leinheit (6) aufnimmt, einem Vibrationsantrieb (9), der mit der Beschickungsrinne verbunden ist und die Artikel veranlasst, sich entlang dieser von ihrem Einlaßende zu einem Auslaßende der Beschickungsrinne zu bewegen, unter dem ein Wägebehälter (17) angeordnet ist, der von einer Wägeeinheit (10) zum Liefern eines Meßwertes des Gewichts der in dem Wägebehälter enthaltenen Artikel gestützt ist, wobei die Beschickungsrinne eine Artikeltragefläche aufweist, die nach unten von der Sammeleinheit weg geneigt ist, um Artikel dazu zu veranlassen der Rinne entlang zu gleiten, und wobei der Wägebehälter nach Abschluß eines Wägevorgangs wahlweise zum Ausgeben seines Inhaltes in eine unterhalb des Wägebehälters angebrachte Sammelrutsche (11) geöffnet werden kann; gekennzeichnet durch eine an einer dem Auslaßende der Beschickungsrinne (8) benachbarten Stelle vorgesehene Flüssigkeitsdrainagevorrichtung (80, 82, 87) zum Abführen von Flüssigkeit von den Artikeln bevor diese das Auslaßende in Richtung des Wägebehälters (17) verlassen.

2. Vorrichtung nach Anspruch 1, bei der die Flüssigkeitsdrainagevorrichtung eine unter dem Auslaßende der Rinne angeordnete Schale (82) zum Sammeln der abgeführten Flüssigkeit aufweist.

3. Vorrichtung nach Anspruch 2, mit einer von der Schale (82) wegführenden Drainagepassage.

4. Vorrichtung nach Anspruch 3, bei der die Drainagepassage an ihrem unteren Ende in die Sammelrutsche (11) führt.

5. Vorrichtung nach Anspruch 2, 3 oder 4, bei der die Flüssigkeitsdrainagevorrichtung außerdem ein in der Beschickungsrinne (8) ausgebildetes und über der Schale angeordnetes Flüssigkeitsdrainageloch aufweist.

6. Vorrichtung nach einem der vorhergehenden Ansprüche, ferner mit einem Ständer (30), welcher einen Teil der Drainagevorrichtung abstützt, wobei der Ständer schwenkbar zwischen einer aufrechten Betriebsstellung und einer gekippten Stellung zur Erleichterung der Reinigung desselben bewegbar ist.

7. Vorrichtung nach einem der vorhergehenden Ansprüche, bei der dem Auslaßende der Beschickungsrinne benachbart ein Verschluß (28) vorgesehen ist, der, gesteuert durch einen mit dem Verschluß gekoppelten Betätiger, schwenkbar zur Bewegung um eine horizontale Achse zwischen einer Öffnungsstellung zum Ermöglichen des Durchgangs der Artikel von der Rinne zu dem darunter befindlichen Wägebehälter und einer Schließstellung zum Sperren des Durchgangs, gelagert ist.

8. Vorrichtung nach Anspruch 7 rückbezogen auf Anspruch 6, bei der der Verschluß schwenkbar an dem Ständer (30) angebracht ist.

9. Vorrichtung nach einem der vorhergehenden Ansprüche, mit einer in der Sammelrutsche (11) angebrachten Netzrutsche (111), die ein Abfließen von Flüssigkeit von in die Netzrutsche ausgegebenen Artikeln ermöglicht, wobei die Sammelrutsche ein seitliches Abflußrohr (113) zum Abführen von durch die Netzrutsche abgeführter Flüssigkeit aufweist.

10. Vorrichtung nach einem der vorhergehenden Ansprüche, bei der der Wägebehälter (17) mit der Wägeeinheit (10) durch Mittel verbunden ist, die ein leichtes Lösen des Wägebehälters von der Wägeeinheit ermöglichen.

11. Vorrichtung nach einem der vorhergehenden Ansprüche, bei der die Beschickungsrinne (8) an einem Vibrator (9) angebracht ist, der von einer Gruppe von Schraubenfedern (70) getragen wird, die von einer Basisplatte (71) gestützt sind, wobei die Basisplatte (71) lösbar auf einer Stützbasis (4) befestigt ist, die auch die Sammeleinheit (6) und die Wägeeinheit (10) trägt.

12. Vorrichtung nach Anspruch 11, bei der die Schraubenfedern (70) zwischen dem Vibrator (9) und der Basisplatte (71) in leicht lösbarer Weise mit der Basisplatte und/oder dem Vibrator verbunden sind.

13. Vorrichtung nach einem der vorhergehenden Ansprüche, mit einer Artikelzuführvorrichtung (41) zum Beschicken der Sammeleinheit (6) mit den Artikeln, und Beschickungsregulierungseinrichtung (40, 46), die so angeordnet sind, daß ein räumlich gesendetes Signal von einem Detektor (46) empfangen wird, wenn die Menge der in der Sammeleinheit enthaltenen Artikel beim Betrieb der Vorrichtung unter eine vorgewählte Größe fällt, wobei das Signal den Detektor veranlaßt, den Betrieb der Artikelzuführvorrichtung einzuleiten.

14. Vorrichtung nach Anspruch 13, bei der ein Gewichtssensor derart angeordnet ist, daß er das Gewicht der in der Sammeleinheit (6) enthaltenen Artikel ermittelt und die Übertragung des Signals an den Detektor veranlaßt, wenn das ermittelte Gewicht unter einem vorgewählten Wert liegt.

15. Vorrichtung nach Anspruch 13, bei der die Beschickungsregulierungseinrichtung eine lichtemittierende Einrichtung (40a) umfaßt, welche einen Lichtstrahl derart über die Sammeleinheit (6) sendet, daß dieser von dem Detektor, der ein lichtempfindlicher Detektor (46a) ist, empfangen wird, jedoch nur dann, wenn die Höhe in der die Artikel in der Sammeleinheit gestapelt sind niedriger als ein vorgewählter Wert ist.

16. Vorrichtung nach einem der vorhergehenden Ansprüche, bei der der Wägebehälter zum direkten Empfang der Artikel aus dem Auslaßende der Beschickungsrinne angeordnet ist, wobei kein Muldenbehälter zwischen diesem Auslaß und dem Wägebehälter vorgesehen ist.

17. Vorrichtung nach einem der vorhergehenden Ansprüche, bei der die Kombination von Beschickungsrinne (8), Vibrationsantrieb (9), Flüssigkeitsdrainagevorrichtung (80, 82, 89), Wägebehälter (17) und Wägeeinheit (10) eine von mehreren solcher Kombinationen ist, die derart in kreisförmiger Anordnung um einen gemeinsamen die Sammeleinheit (6) bildenden Verteilungstisch angeordnet sind, daß die Beschickungsrinnen sich von dem Tisch radial nach außen erstrecken, wobei die Sammelrutsche (11) allen Kombinationen gemeinsam ist.

**Revendications**

1. Appareil de pesage comprenant une unité d'accumulation (6), destinée à recevoir des articles à peser, une auge d'alimentation (8) comportant une extrémité d'entrée disposée de manière à recevoir les articles arrivant d'une région périphérique de l'unité d'accumulation lorsque l'appareil est en service, et un moyen (9) d'entraînement par vibrations relié à l'auge d'alimentation et pouvant fonctionner de manière à faire passer ces articles le long de cette auge depuis son extrémité d'entrée jusqu'à son extrémité de sortie en-dessous de laquelle est disposée une trémie de pesage (17) supportée par une unité de pesage (10) pour fournir une mesure du poids des articles contenus dans la trémie de pesage, l'auge d'alimentation comportant une surface de support d'article qui est inclinée vers le bas, dans le sens opposé à l'unité d'accumulation, pour inciter les articles à glisser le long de l'auge, et la trémie de pesage pouvant être ouverte sélectivement pour décharger son contenu dans une goulotte collectrice (11), montée en-dessous de la trémie de pesage, lors de l'achèvement d'une opération de pesage;
caractérisé par un dispositif (80, 82, 87) d'évacuation de liquide, disposé à un endroit adjacent à ladite extrémité de sortie de l'auge d'alimentation (8), pour évacuer le liquide des articles avant que ceux-ci ne passent au-delà de l'extrémité de sortie en direction de la trémie de pesage (17).

2. Appareil selon la revendication 1, dans lequel le dispositif d'évacuation de liquide comprend un bac (82), disposé en-dessous de ladite extrémité de sortie de l'auge, pour recueillir le liquide évacué.

3. Appareil selon la revendication 2, comprenant un passage d'évacuation s'étendant depuis ledit bac (82).

4. Appareil selon la revendication 3, dans lequel le passage d'évacuation aboutit, à son extrémité inférieure, dans la goulotte collectrice (11).

5. Appareil selon la revendication 2, 3 ou 4, dans lequel le dispositif d'évacuation de liquide comprend aussi un trou d'évacuation de liquide formé dans l'auge d'alimentation (8) et situé au-dessus dudit bac.

6. Appareil selon n'importe quelle revendication précédente, comprenant, en outre, un support (30) supportant une partie dudit dispositif d'évacuation, ce support pouvant pivoter entre une position verticale active et une position inclinée pour faciliter son nettoyage.

7. Appareil selon n'importe laquelle des revendications précédentes, dans lequel est disposé, de façon adjacente à l'extrémité de sortie de l'auge d'alimentation, un volet (28) supporté de façon pivotante en vue d'un déplacement, sous la commande d'un actionneur (31) couplé à ce volet, autour d'un axe horizontal, entre une position ouverte pour permettre aux articles de passer de l'auge à la trémie de pesage située en-dessous et une position fermée pour empêcher ce passage.

8. Appareil selon la revendication 7 lue comme étant rattachée à la revendication 6, dans lequel ledit volet est monté de façon pivotante sur le support (30).

9. Appareil selon n'importe quelle revendication précédente, comprenant une goulotte ajourée (111) montée à l'intérieur de la goulotte collectrice (11) pour permettre au liquide de s'écouler des articles déchargés dans la goulotte ajourée, ladite goulotte collectrice étant pourvue d'un conduit latéral d'évacuation (113) pour évacuer le liquide qui s'est écoulé à travers la goulotte ajourée.

10. Appareil selon n'importe quelle revendication précédente, dans lequel la goulotte de pesage (17) est accouplée à l'unité de pesage (10) par un moyen permettant à la trémie d'être séparée facilement de l'unité de pesage.

11. Appareil selon n'importe quelle revendication précédente, dans lequel l'auge d'alimentation (8) est montée sur un vibrateur (9) supporté par un ensemble de ressorts hélicoïdaux (70) supportés par une plaque (71) de base, la plaque (71) de base étant montée de façon démontable sur une base (4) de support qui supporte également l'unité d'accumulation (6) et l'unité de pesage (10).

12. Appareil selon la revendication 11, dans lequel les ressorts hélicoïdaux (70) se trouvant entre le vibrateur (9) et la plaque (71) de base sont reliés, d'une manière facilement séparable, à la plaque de base et/ou au vibrateur.

13. Appareil selon n'importe quelle revendication précédente, comprenant un dispositif (41) d'alimentation en articles, pouvant être mis en fonction pour fournir des articles à l'unité d'accumulation (6), et des moyens (40, 46) de régulation d'alimentation agencés pour faire en sorte qu'un signal transmis spatialement soit reçu par un détecteur (46) si la quantité d'articles contenue dans l'unité d'accumulation tombe en-dessous d'une grandeur présélectionnée, lorsque l'appareil est en service, ce signal amenant le détecteur à déclencher le fonctionnement du dispositif d'alimentation en articles.

14. Appareil selon la revendication 13, dans lequel un capteur de poids est disposé de manière à détecter le poids des articles contenus dans l'unité d'accumulation (6) et pour faire en sorte que ledit signal soit transmis audit détecteur si le poids détecté est inférieur à une valeur présélectionnée.

15. Appareil selon la revendication 13, dans lequel le moyen de régulation d'alimentation comprend un dispositif photoémetteur (40a) agencé pour transmettre un faisceau de lumière au-dessus de l'unité d'accumulation (6) de manière que ce faisceau soit reçu par ledit détecteur, qui est un détecteur photosensible (46a), si et seulement si la hauteur à laquelle les articles sont empilés sur l'unité d'accumulation est inférieure à une valeur présélectionnée.

16. Appareil selon n'importe quelle revendication précédente, dans lequel ladite trémie de pesage est agencée de manière à recevoir les articles directement de l'extrémité de sortie de ladite auge d'alimentation, aucune trémie d'accumulation n'étant prévue entre cette extrémité de sortie et la trémie de pesage.

17. Appareil selon n'importe quelle revendication précédente, dans lequel la combinaison de l'auge d'alimentation (8), du moyen (9) d'entraînement par vibrations, du dispositif (80, 82, 89) d'évacuation de liquide, de la trémie de pesage (17) et de l'unité de pesage (10) est l'une de plusieurs telles combinaisons disposées en une rangée circulaire autour d'une table de distribution commune qui constitue l'unité d'accumulation (6), de telle sorte que les auges d'alimentation s'étendent radialement vers l'extérieur depuis cette table, ladite goulotte collectrice (11) étant commune à toutes lesdites combinaisons.

# Fig. 1

# Fig. 2

Fig.3

# Fig.4

8

28

33

d

32

17

30

4

31

29

# Fig.5

# Fig. 6

Fig.7

# Fig.8

# Fig.9

EP 0 175 592 B1

# Fig.10

# Fig. 11

# Fig. 12

# Fig. 13

# Fig. 14